# EUROPÄISCHE PATENTSCHRIFT

(11) **EP 1 151 843 B1**
(45) Veröffentlichungstag und Bekanntmachung des Hinweises auf die Patenterteilung: **19.02.2003**
(21) Anmeldenummer: 00109331.9
(22) Anmeldetag: 02.05.2000
(51) Int. Cl.: B29C 45/50

(54) **Einspritzeinrichtung für eine Spritzgiessmaschine**
Injection unit for an injecton moulding machine
Unité d'injection pour une machine à mouler par injection

(43) Veröffentlichungstag der Anmeldung: 07.11.2001
(73) Patentinhaber: ENGEL MASCHINENBAU GESELLSCHAFT MBH, A-4311 Schwertberg (AT)
(72) Erfinder: Eppich, Stefan, 4341 Arbing (AT); Ellinger, Alfred, 4320 Perg (AT); Frechinger, Johannes, 4223 Katsdorf (AT)
(74) Vertreter: Hofinger, Engelbert, Dr.Dr.

(56) Entgegenhaltungen:
- EP-A- 0 331 735
- EP-A- 0 350 872
- US-A- 5 206 034
- US-A- 5 209 936
- PATENT ABSTRACTS OF JAPAN vol. 14, no. 155 (M-0954), 26. März 1990 (1990-03-26) -& JP 02 016023 A (FANUC LTD), 19. Januar 1990 (1990-01-19)

## Beschreibung

Die Erfindung bezieht sich auf eine Einspritzeinrichtung für eine Spritzgießmaschine mit einer Schnecke zum Dosieren von Kunststoff, welche drehbar in einer Druckplatte gelagert ist, welche mittels mindestens zwei elektrisch angetriebener Spindeln längsverschiebbar ist, wobei der vom Kunststoff auf die Schnecke ausgeübte Druck mittels mindestens eines Sensors festgestellt wird, der die Verformung eines zwischen einer feststehenden, das Drehlager der Schnecke umgebenden Hülse und der Druckplatte angeordneten Verbindungsringes mißt.

Bei hydraulisch angetriebenen Spritzgießmaschinen kann man davon ausgehen, daß sich der Hydraulikdruck in den im Kunststoff herrschenden Druck übersetzt. Der Druck im Kunststoff kann somit aus dem Hydraulikdruck erschlossen werden, was die Verwendung teurer und störanfälliger Sensoren im Formraum überflüssig macht. Bei elektrisch angetriebenen Spritzgießmaschinen hingegen war man zunächst der Auffassung, daß das vom Antrieb abgegebene Drehmoment, welches den Druck im Kunststoff bestimmt, hinreichend durch die momentane Stromstärke bestimmt sei. Tatsächlich wird jedoch vom Motor selbst periodisch Energie aufgenommen und abgegeben, sodaß durch eine Überwachung der Stromstärke zwar ein durchschnittliches Drehmoment und damit ein durchschnittlicher Druck im Material bestimmbar ist, die Überwachung des Einspritzvorganges lediglich durch Überwachung des vom Motor aufgenommenen Stromes jedoch problematisch ist.

Aus den dargelegten Gründen ist man bereits relativ früh zur Erkenntnis gekommen, daß zur Überwachung des Einspritz- und Haltedruckes der in der Schnecke auftretende Druck oder der von der Schnecke ausgeübte Druck gemessen werden muß (vgl. JP 60-174625 Nissei, EP 0 230 488 A1). Bei einer Einrichtung der eingangs definierten Art, wie sie etwa in EP 0 260 328 A1 dargestellt ist, ergibt sich für die Ausbildung und Anordnung der Sensoren dadurch ein Problem, daß der Einspritz- und Haltedruck durch Aufbringung einer Kraft erfolgt, welche zwar geringer ist als die Schließkraft, aber auch bei Maschinen mittlerer Größe ohne weiteres mehr als 100 kN betragen kann. Da diese Kraft vom Verbindungsring zwischen dem feststehenden Teil des Drehlagers der Schnecke und der Druckplatte aufgenommen werden muß, ohne daß die genaue Ausrichtung der Schnecke leidet, ist man bisher davon ausgegangen. daß dieser Verbindungsring massiv ausgebildet und in Axialrichtung zwischen Lagerhülse und Druckplatte angeordnet sein muß. Insbesondere war dieser Verbindungsring mit der Lagerhülse des Drehlagers der Schnecke einstückig ausgebildet (vgl. JP 7-67722 Niigata).

Weitere Beispiele für die Ausführung von Verbindungsringen sind in der EP-A-0 331 735 und in der US-A-5 206 034 beschrieben.

Die bekannte Anordnung der Drucksensoren hat den Nachteil, daß der Staudruck, welcher beim Plastifizieren und Dosieren des Kunststoffes auftritt, um eine Größenordnung geringer ist als gegenüber dem Einspritz- und Haltedruck und die Verformung des in bekannter Weise ausgebildeten Verbindungsringes zwischen Lagerhülse und Druckplatte kein hinreichend deutliches Signal liefert.

Die Erfindung vermeidet diesen Nachteil dadurch, daß in Verbindung mit den Merkmalen des Oberbegriffs des Patentanspruchs 1 der Verbindungsring als Ringscheibe ausgebildet ist, deren innerer Rand mit der Hülse und deren äußerer Rand mit der Druckplatte verbunden ist.

Zweckmäßige Weiterbildungen der Erfindung sind Gegenstand der abhängigen Ansprüche.

Die scheibenförmige Ausbildung des vom Druck des Kunststoffes verformten Verbindungsringes führt zunächst zu einer erheblichen Relatiwerschiebung von Schnecke und Druckplatte, wenn durch die Druckplatte auf die Schnecke eingewirkt wird. Die Verschiebung stellt eine Meßgröße dar, welche ohne weiteres mittels in der Ringscheibe selbst angebrachter Dehnmeßstreifen oder durch sonstige bekannte Einrichtungen zur Überwachung der Relativposition zweier Maschinenteile registriert werden kann. Dies gilt insbesondere dann, wenn der Querschnitt der Ringscheibe im Mittelbereich verringert ist. In Umfangs- und Radialrichtung weist die erfindungsgemäße Ringscheibe große Festigkeit auf, sodaß trotz ihrer erheblichen Verformung in Längsrichtung die Präzision der Lagerung der Welle nicht beeinträchtigt wird.

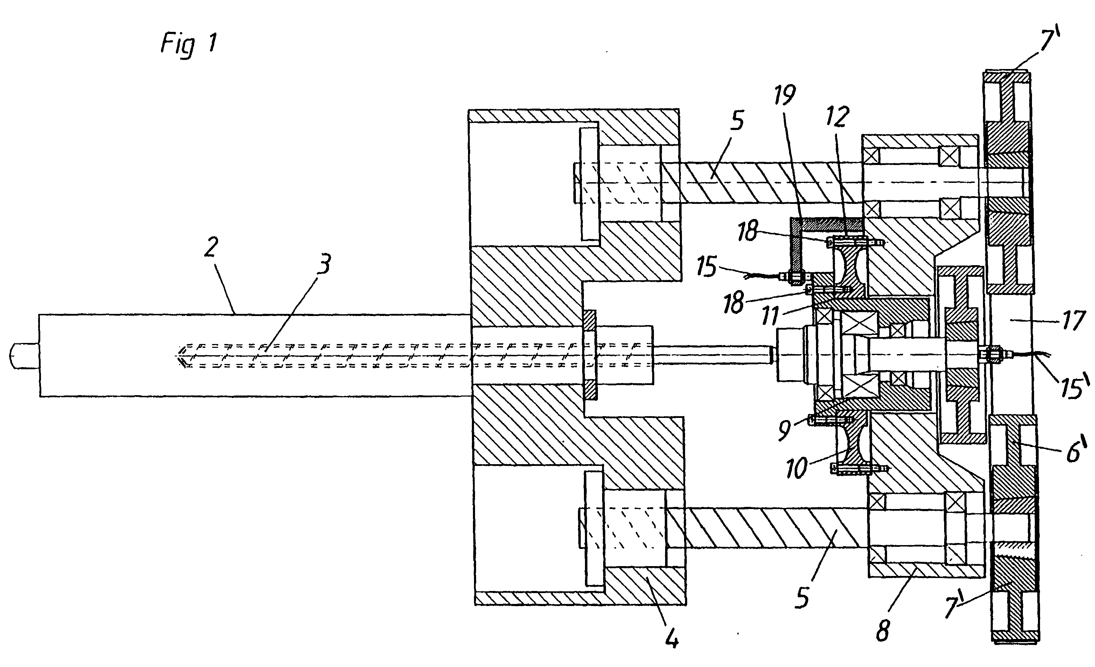

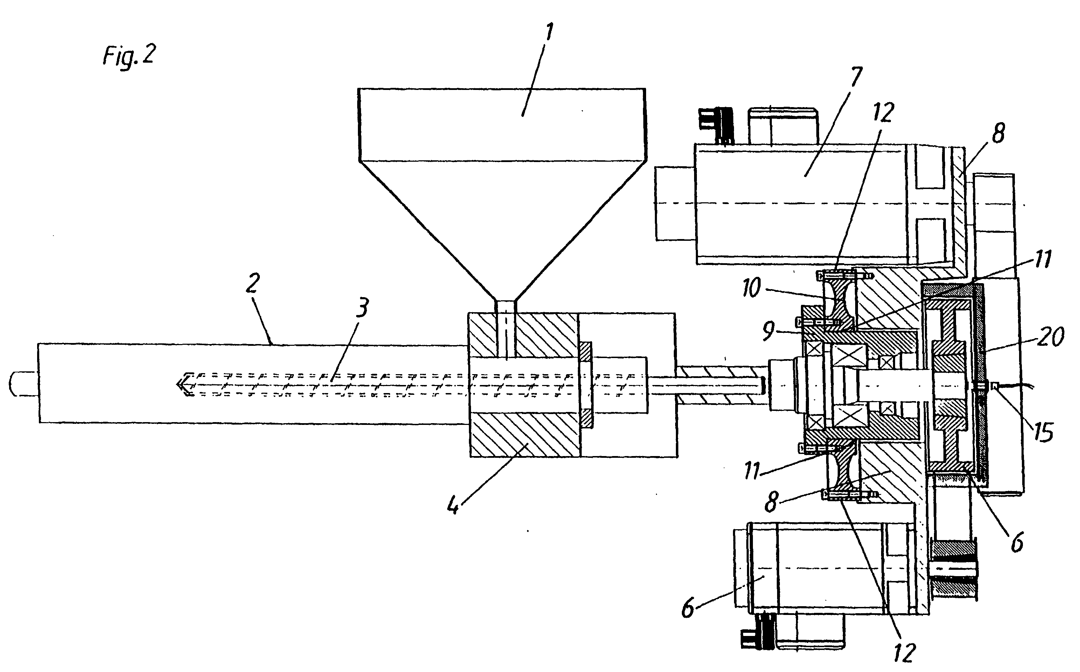

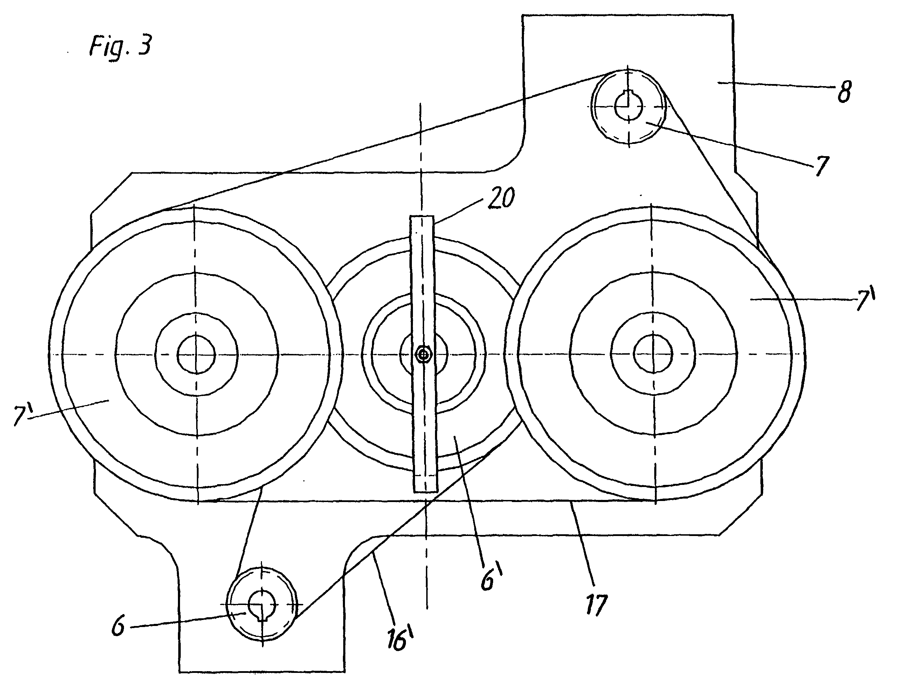

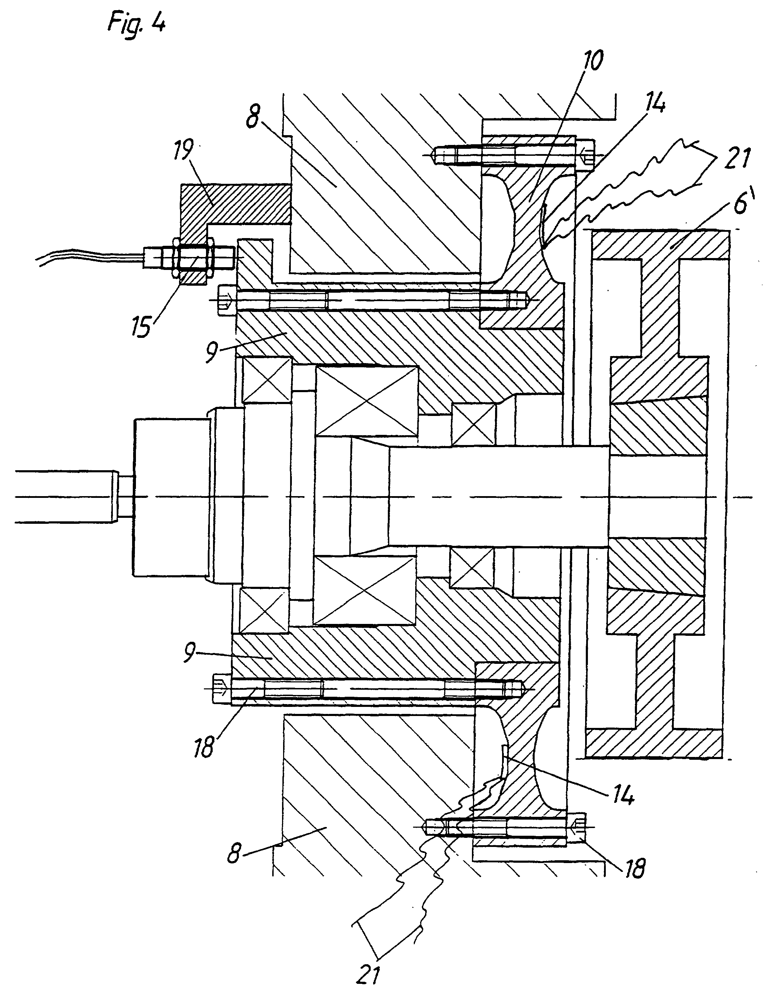

Einzelheiten der Erfindung werden anschließend anhand der Zeichnung erläutert. In dieser zeigt Fig. 1 einen Horizontalschnitt der wesentlichen Teile einer erfindungsgemäßen Einspritzeinrichtung, Fig. 2 den entsprechenden Vertikalschnitt, Fig. 3 die zugehörige Ansicht von rechts in Fig. 2. Fig. 4 ist ein vergrößerter Ausschnitt eines Horizontalschnittes durch ein zweites Ausführungsbeispiel der Erfindung.

Die in Fig. 1 - 3 dargestellte Einspritzeinrichtung ist als solche weitgehend konventionell und muß daher nicht im Detail beschrieben werden. Sie weist eine Schnecke 3 auf, welche in einem Massezylinder 2 drehbar und längsverschiebbar gelagert ist. Durch den Trichter 1 der Schnecke 3 zugeführter Kunststoff wird durch die Drehung der Schnecke 3 plastifiziert und im Schneckenvorraum gesammelt, bis er durch Vorschieben der Schnecke 3 in den nicht dargestellten Formhohlraum eingespritzt wird. Während des Dosierens und Einspritzens des Kunststoffes bleibt die Trägerplatte 4, welche mit dem Massezylinder 2 verbunden ist, unbeweglich. Das Ende der Schnecke 3 ist in einer Druckplatte 8 gelagert, an der sich die Schnecke 3 abstützt. Die Druckplatte 8 ihrerseits ist in der Trägerplatte 4 über Spindeln 5 abgestützt. Der Antrieb der Spindeln 5 erfolgt über den Keilriemen 17 und die Antriebsscheiben 7' mittels eines Servomotors 7, der die Bewegung der Druckplatte 8 mitmacht. Ebenfalls mit der Druckplatte 8 verbunden ist der die Schnecke 3 drehende Dosierantrieb 6, welcher über den Keilriemen 16 die Antriebsscheibe 6' antreibt.

Das Ende der Schnecke 3 ist in einem hier nicht näher interessierenden Drehlager gelagert, welches von einer feststehenden Hülse 9 umgeben ist. Die Verbindung der Hülse 9 und der Druckplatte 8 wird durch eine Ringscheibe 10 vermittelt. Der Querschnitt dieser Ringscheibe entspricht in etwa dem eines I-Trägers. Ihr innerer Rand 11 ist mit der Hülse 9, ihr äußerer Rand 12 mit der Druckplatte 8 durch Schrauben 18 verbunden.

Beim Einspritzvorgang wird die Druckplatte 8 mittels des Motors 7 über die Spindeln 5 nach links bewegt, wodurch im Kunststoff vor der Schnecke 3 ein Druck entsteht, welcher zur Verformung der Ringscheibe 10 führt. Wird andererseits die Schnecke 3 durch den Dosiermotor 6 in Drehung versetzt, so übt der sich vor der Schnecke ansammelnde Kunststoff einen Staudruck aus, welcher durch Bewegung der Druckplatte 8 nach rechts in Grenzen gehalten wird. Wiederum kommt es zu einer Verformung der Ringscheibe 10.

Die Ringscheibe 10 kann, wie in Fig. 1 - 3 dargestellt, an der Vorderseite der Druckplatte 8 angeordnet sein oder aber, wie im Ausführungsbeispiel nach Fig. 4, an deren Hinterseite. Wesentlich für die Erfindung ist, daß die Ringscheibe 10 eine relativ große Axialverschiebung zwischen Hülse 9 und Druckplatte 8 ermöglicht, welche durch geeignete Sensoren feststellbar ist.

In Fig. 1 sind zwei als Abstandmesser ausgebildete Sensoren 15 bzw. 15' dargestellt. Der Sensor 15 mißt dabei auf induktivem Wege den Abstand zwischen der Hülse 9 und einem mit der Platte 8 fest verbundenen Tragwinkel 19. Der Sensor 15' hingegen ist über den Bügel 20 fest mit der Platte 8 verbunden und mißt den Abstand zur Antriebsscheibe 6', welche gegenüber der Hülse 9 nicht längsverschiebbar ist. Die Anordnung mehrerer Sensoren 15, 15' ist sinnvoll, da deren Ergebnisse gemittelt werden können.

Beim Ausführungsbeispiel nach Fig. 4 ist im Unterschied zu Fig. 1 - 3 zunächst die Ringscheibe 10 an die Rückseite der Druckplatte 8 versetzt. Zusätzlich zum Sensor 15 sind hier Dehnmeßstreifen 14 vorgesehen, welche über Leitungen 21 mit einer Auswerteschaltung verbunden sind. Diese errechnet aus der festgestellten Verformung die auf die Schnecke 3 wirkende Kraft und damit den im Kunststoff herrschenden Druck.

## Patentansprüche

1. Einspritzeinrichtung für eine Spritzgießmaschine mit einer Schnecke (3) zum Dosieren von Kunststoff, welche drehbar in einer Druckplatte (8) gelagert ist, welche mittels mindestens zwei elektrisch angetriebener Spindeln (5) längsverschiebbar ist, wobei der vom Kunststoff auf die Schnecke (3) ausgeübte Druck mittels mindestens eines Sensors (14;15) festgestellt wird, der die Verformung eines zwischen einer feststehenden, das Drehlager der Schnecke (3) umgebenden Hülse (9) und der Druckplatte (8) angeordneten Verbindungsringes mißt, **dadurch gekennzeichnet, daß** der Verbindungsring als Ringscheibe (10) ausgebildet ist, deren innerer Rand (11) mit der Hülse (9) und deren äußerer Rand (12) mit der Druckplatte (8) verbunden ist.

2. Einspritzeinrichtung nach Anspruch 1, **dadurch gekennzeichnet, daß** der Querschnitt der Ringscheibe (10) von den Rändern (11 und 12) aus gleichsinnig abnimmt.

3. Einspritzeinrichtung nach Anspruch 1 oder 2, **dadurch gekennzeichnet, daß** mindestens ein Sensor (14) an der Ringscheibe (10) angebracht ist, insbesondere in Form eines Dehnmeßstreifens.

4. Einspritzeinrichtung nach einem der Ansprüche 1 bis 3, **dadurch gekennzeichnet, daß** mindestens ein Sensor (15,15') die relative Lage von Hülse (9) und Druckplatte (8) in Richtung der Schnecke (3) feststellt.

## Claims

1. Injection means for an injection moulding machine with a screw (3) for metering plastics, which is mounted in a rotatable manner in a clamping plate (8), which is longitudinally displaceable by means of at least two electrically driven spindles (5), wherein the pressure exerted by plastics upon the screw (3) is determined by at least one sensor (14; 15) which measures the deformation of a connecting ring arranged between a stationary sleeve (9) surrounding the bearing of the screw (3) and the clamping plate (8), **characterised in that** the connecting ring is configured as an annular disc (10), the inner edge (11) of which is connected to the sleeve (9), and the outer edge (12) of which is connected to the clamping plate (8).

2. Injection means according to claim 1, **characterised in that** the cross-section of the annular disc (10) reduces with increasing distance from the edges (11 and 12).

3. Injection means according to claim 1 or 2, **characterised in that** at least one sensor (14) is fitted on the annular disc (10), in particular in the form of an expansion measuring strip.

4. Injection means according to one of claims 1 to 3, **characterised in that** at least one sensor (15, 15') determines the relative position of the sleeve (9) and clamping plate (8) in the direction of the screw (3).

## Revendications

1. Dispositif d'injection pour une machine à mouler par injection, avec une vis (3) pour le dosage de matière synthétique, vis montée à rotation dans une plaque de pressage (8), déplaçable longitudinalement à l'aide d'au moins deux broches (5) entraînées de façon électrique, la pression exercée par la matière synthétique sur la vis (3) étant détectée à l'aide d'au moins un capteur (14; 15), qui mesure la déformation d'une bague de liaison, disposée entre une douille (9) stationnaire, entourant le palier de rotation de la vis (3), et la plaque de pressage (8), **caractérisé en ce que** la bague de liaison est réalisée sous la forme de rondelle annulaire (10), dont le bord intérieur (11) est relié à la douille (9) et dont le bord extérieur (12) est relié à la plaque de pressage (8).

2. Dispositif d'injection selon la revendication 1, **caractérisé en ce que** l'aire de la section transversale de la rondelle annulaire (10) va en diminuant, dans le même sens, depuis les bords (11 et 12).

3. Dispositif d'injection selon la revendication 1 ou 2, **caractérisé en ce qu'**au moins un capteur (14) est monté sur la rondelle annulaire (10), en particulier un capteur ayant la forme d'une jauge extensométrique.

4. Dispositif d'injection selon l'une des revendications 1à 3, **caractérisé en ce qu'**au moins un capteur (15, 15') détecte la position relative de la douille (9) et de la plaque de pressage (8), dans la direction de la vis (3).
